(19) Europäisches Patentamt
European Patent Office
Office européen des brevets

(11) **EP 0 669 565 B1**

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(51) Int Cl.$^6$: **G05D 16/20**, B60T 13/66

(21) Anmeldenummer: **94118969.8**

(22) Anmeldetag: **02.12.1994**

(54) **Druckregeleinrichtung**

Pressure control device

Dispositif de régulation de pression

(84) Benannte Vertragsstaaten:
**DE FR GB IT SE**

(30) Priorität: **25.02.1994 DE 4406235**

(43) Veröffentlichungstag der Anmeldung:
**30.08.1995 Patentblatt 1995/35**

(73) Patentinhaber: **WABCO GmbH**
**30453 Hannover (DE)**

(72) Erfinder:
• **Schappler, Hartmut**
**D-30455 Hannover (DE)**
• **Neuhaus, Detlev**
**D-30519 Hannover (DE)**
• **Schröder-Berg, Jörg**
**D-30453 Hannover (DE)**

(74) Vertreter: **Schrödter, Manfred, Dipl.-Ing. et al**
**WABCO GmbH**
**Postfach 91 12 80**
**30432 Hannover (DE)**

(56) Entgegenhaltungen:
EP-A- 0 531 077          DE-A- 4 140 271

• **PATENT ABSTRACTS OF JAPAN vol. 008, no. 252 (P-314), 17.November 1984 & JP-A-59 123910 (MASUDA KENJI), 17.Juli 1984,**

**Beschreibung**

Die Erfindung bezieht sich auf eine Druckregeleinrichtung mit einem digitalen Abtastregler, insbesondere zum Einstellen von Bremsdrücken in einem Fahrzeug.

Bei Nutzfahrzeugen ist es bekannt, die Bremse nicht mehr mittels eines pneumatischen Steuerdruckes anzusteuern, sondern die Signalübertragung elektrisch auszubilden. Das Bremspedal gibt dabei bei Betätigung durch den Fahrer ein elektrisches Signal ab, das in einer Elektronik verarbeitet wird, und mit welchem mittels Magnetventilen der Bremsdruck in den Bremszylindern des Fahrzeuges einstellbar ist (DE 36 03 810 A1). Bei solchen elektrischen Bremssystemen müssen neben Anforderungen an die Sicherheit auch hohe Anforderungen an den Gleichlauf, die Wiederholbarkeit und die Genauigkeit der eingestellten Bremsdrücke gestellt werden. Falls zusätzlich ein Antiblockiersystem (ABS) vorhanden ist, müssen die zur Druckreglung verwendeten Druck-Modulatoren bzw. Magnetventile (MV) darüber hinaus auch noch sehr schnell arbeiten, um bei den üblichen Regelzyklen von 2 bis 5 pro Sekunde die gewünschten Drücke einstellen zu können.

Als Magnetventile können im einfachsten Falle schaltende Auf/Zu-Ventile benutzt werden, die elektrisch angesteuert entweder voll geöffnet oder voll geschlossen werden. Mit solchen Ventilen kann der Bremsdruck gesteigert, gehalten oder gesenkt werden. Die Bremsdruckänderungen erfolgen stufenförmig.

Es können aber auch sogenannte Druckmodulatoren eingesetzt werden, die in der Lage sind, die gewünschten Drücke analog einzustellen. Diese sind jedoch relativ teuer und nicht besonders schnell.

Schließlich können auch schaltende Magnetventile verwendet werden, die aber mit einer Frequenz elektrisch angesteuert werden, welche über der Eigenfrequenz (z. B. 30 Hz) liegt (EP 0 014 369 B1). Hiermit läßt sich das Magnetventil in einem relativ schmalen Arbeitsbereich als stetig steuerbare Drosselstelle betreiben. Der Regelkomfort wird gegenüber einem reinen Auf/Zu-Ventil dadurch erhöht, und die Abnutzung der Ventilsitze vermindert. Auf der anderen Seite ergeben sich aber erhebliche Probleme bei der Regelung, da ein derart angesteuertes Ventil stark totzeitbehaftet ist, eine starke Hysterese aufweist, nichtlinear ist und empfindlich auf Fertigungsstreuungen und Alterung reagiert.

Weitere Probleme bei der Bremsdruckregelung in einem Nutzfahrzeug ergeben sich durch die Nichtlinearität der Übertragungsstrecke, d. h. der Rohr- und Schlauchleitungen, und des zu regelnden Volumens, also des Bremszylinders. So können z. B. in den Rohrleitungen bei großen Volumenstrom-Gradienten Druckschwingungen auftreten. Weitere Nichtlinearitäten ergeben sich dadurch, daß der Bremszylinder ein stark veränderliches Volumen aufweist. Weiter treten auch bei geschlossenem Magnetventil im Bremszylinder Temperatur-Ausgleichseffekte auf, d. h. der Bremszylinderdruck ändert sich langsam bei Temperaturänderungen auch ohne Volumenstrom.

Aus der DE 41 40 271 A1 ist weiter bekannt, eine besonders schnelle Betätigung des Bremsventils durch einen am Bremsventil angeordneten Sensor sowie eine Elektronik zu erfassen. Falls eine derartige schnelle Betätigung erkannt wird, wird ein besonderes Absperrventil geöffnet, welches direkt mit dem Druckmittelvorrat verbunden ist. Hierdurch wird durch eine unmittelbare Belüftung der Bremszylinder eine Schnellbremsung, insbesondere in Notfällen, ermöglicht.

Der Erfindung liegt die Aufgabe zugrunde, eine Druckregeleinrichtung zum Einstellen von Bremsdrücken in einem Fahrzeug anzugeben, die in der Lage ist, alle obengenannten Probleme, die bei der Bremsdruckregelung in Nutzfahrzeugen auftreten, zu berücksichtigen, und die gewünschten Bremsdrücke schnell und ohne Überschwingungen einzustellen.

Diese Aufgabe wird durch die im Patentanspruch 1 angegebene Erfindung gelöst. Die Unteransprüche enthalten zweckmäßige Weiterbildungen.

Die Erfindung wird im folgenden anhand einer Zeichnung näher erläutert.

Die Figur 1 zeigt als schematisches Blockschaltbild ein elektrisches Bremssystem eines Fahrzeugs.

Die Figuren 2 und 3 zeigen Diagramme, aus denen die Totzeit und das Hysterese-Verhalten der verwendeten Magnetventile (Einlaßventil EV und Auslaßventil AV) hervorgehen.

Die Figur 4 zeigt als schematisches Blockschaltbild die Druckregeleinrichtung gemäß der Erfindung sowie die übrigen zum Regelkreis gehörenden Komponenten.

Die Figur 5 zeigt ein Diagramm, bei welchem über der Zeit ein typischer Verlauf der Führungsgröße w und der sich ergebenden Regelgröße y aufgetragen ist.

Die Figuren 6, 7 und 8 zeigen Diagramme mit Verschiebungen der Umsteuerkennung zur Verhinderung von Pendelschwingungen der Magnetventile.

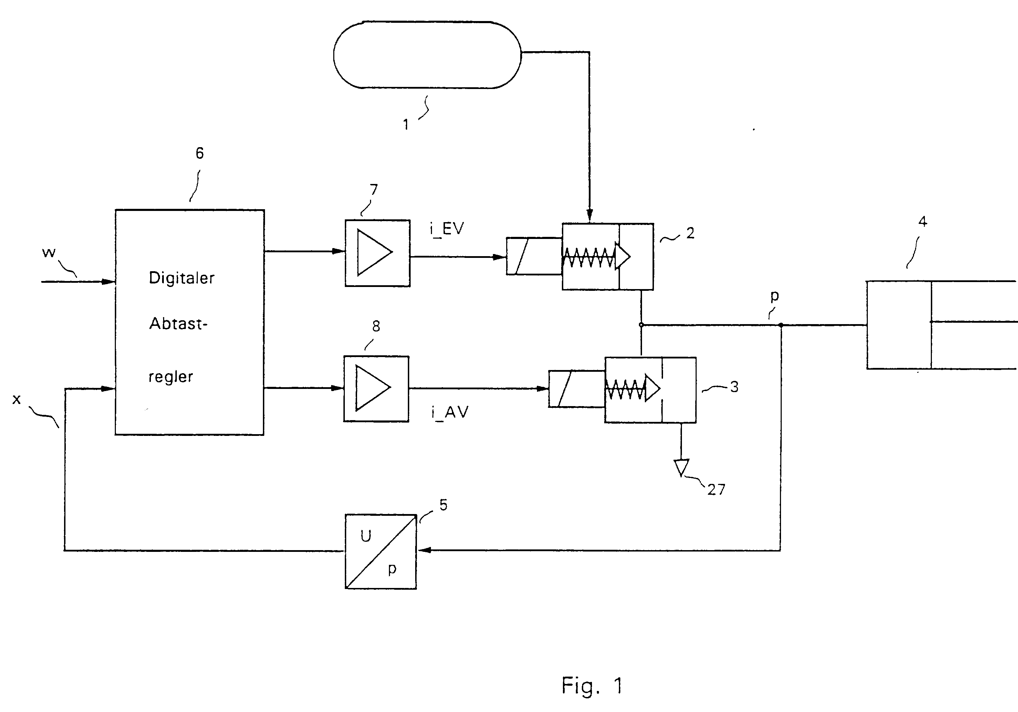

In der Figur 1 ist schematisch ein Blockschaltbild einer Druckregelanordnung dargestellt. In einem Bremszylinder (4) soll ein Bremsdruck eingestellt werden, welcher dem Wert einer Führungsgröße w möglichst schnell und genau folgt. Zur Drucksteigerung dient ein Einlaßventil (2), daß als Magnetventil ausgebildet ist, und einen Druckmittelvorrat (1) mit dem Bremszylinder (4) verbinden kann. Zur Druckabsenkung dient ein Auslaßventil (3), das das im Bremszylinder (4) befindliche Druckmittel (Druckluft oder Öl) zu einem Auslaß (27) hin ableiten kann. Zum Druckhalten im Bremszylinder (4) sind beide Ventile (2, 3) geschlossen. Der Ist-Druck p wird einem Drucksensor (5) zugeleitet und dort in eine proportionale Ausgangsspannung umgewandelt. Diese wird als Istwert x einem digitalen Abtastregler (6) zugeleitet. Der Regler vergleicht in bekannter Weise die Führungsgröße w mit dem Istwert x und gibt bei eventuellen Abweichungen entsprechende Steuersignale über Verstärker (7, 8) an die erwähnten Regelventile (Einlaßventil 2 und Auslaßventil 3) ab, um einen eventuellen Unterschied zu minimieren. Der Regler (6) ist deshalb als Abtastregler bezeichnet, da er an seinen Eingängen Analog-/Digitalwandler aufweist, und somit auch analoge Eingangssignale verarbeiten kann. Diese Signale werden dann in bekannter Weise abgetastet, und somit in eine Digitalzahl umgewandelt.

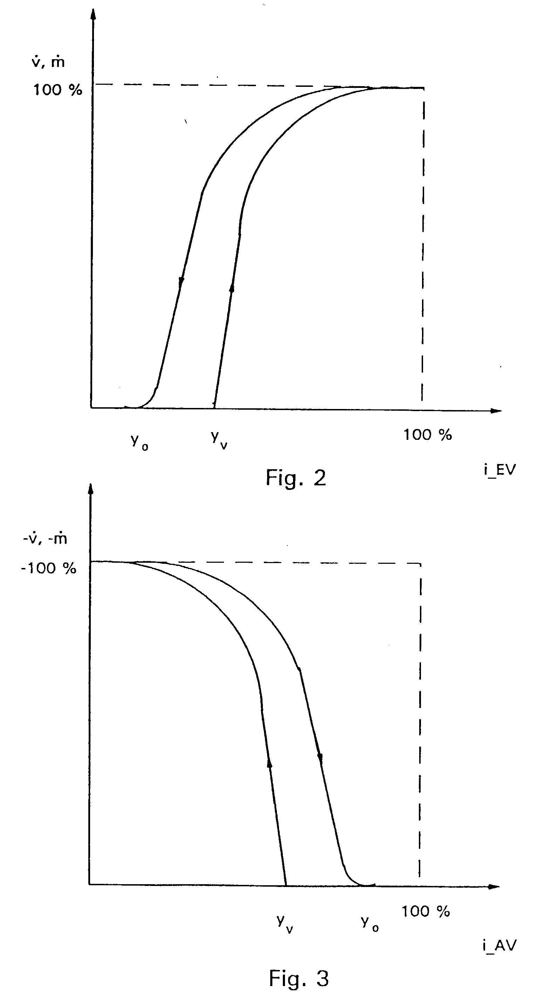

In der Figur 2 ist die Kennlinie des verwendeten Einlaßventils (EV) (2) dargestellt. Auf der Abzisse ist in normierter Form der Steuerstrom i von 0 - 100 % aufgetragen. In der Ordinate ist ebenfalls normiert der Volumenstrom $\dot{v}$ bzw. Massenstrom $\dot{m}$ von 0 - 100 % aufgetragen.

Wie man sieht, beginnt das Ventil infolge seiner Anfangshysterese erst ab einer Ansteuerung von $y_v$ zu öffnen. Bei steigendem Strom erfolgt die vollständige Öffnung zunächst linear, später nichtlinear.

Beim Schließen ergibt sich dieselbe Nichtlinearität, wobei zusätzlich eine Hysterese auftritt. Bei einem Stromwert von $y_0$ ist das Ventil wieder vollständig geschlossen.

Ein entsprechendes Öffnungs- bzw. Schließverhalten ergibt sich auch für das Auslaßventil (AV) (Figur 3).

Wie man aus den Figuren 2 und 3 erkennt, bringen die als Sitzventile ausgebildeten Einlaß- und Auslaßventile mit ihren großen Ansprechtotzonen bei jedem Beginn oder Wechseln einer Belüftungs- oder Entlüftungsdruckphase ein Totzeitverhalten in den Regelkreis ein. Erst beim Erreichen eines Öffnungsstromwertes entsprechend $y_{\dot{v}}$ von etwa 40 % des Strom-Maximalwertes im Betätigungsmagneten und einer entsprechenden erzeugten Undichtigkeit der Dichtfläche tritt ein Volumen-/Massenstrom ($\dot{v}$, $\dot{m}$) des verwendeten Druckmittels in der Bremsleitung auf.

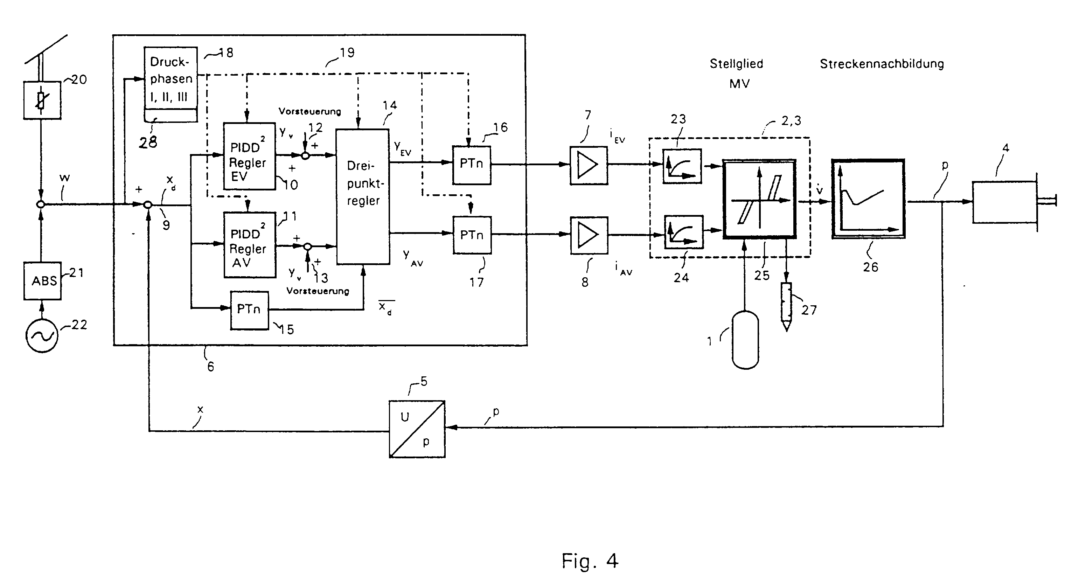

In der Figur 4 ist das schematische Schaltbild der verwendeten erfindungsgemäßen Druckregeleinrichtung genauer dargestellt. Als Führungsgröße w wird dem Abtastregler (6) das Signal eines sogenannten Trittplattenventils (20) zugeführt. Das Trittplattenventil (20) hat hier einen elektrischen Ausgang, wobei die Ausgangsspannung z. B. analog der Stellung der Trittplatte bzw. dem Bremswunsch des Fahrers ist. Als weitere Führungsgröße wird das Ausgangssignal einer ABS-Elektronik (21) zugeführt, welche das Drehverhalten der Fahrzeugräder mittels Radsensoren (22) abtastet und bei erkanntem übermäßigen Bremsschlupf in bekannter Weise ein Signal zum Lösen des zugehörigen Bremszylinders ausgibt. Durch geeignete Maßnahmen wird das Ausgangssignal der ABS-Elektronik (21) gegenüber des Ausgangssignal des Trittplattenventils (20) bevorzugt weitergeleitet. Es können auch noch weitere Eingangsgrößen, beispielsweise das Signal einer Handbremse, zugeführt werden (nicht dargestellt).

Der eigentliche Abtastregler (6) vergleicht nun den Druck-Istwert x mit der Führungsgröße w in einen Differenzbildner (9), wodurch sich die sogenannte Regelabweichung $x_d$ ergibt. Diese wird je einem PIDD²-Regler (10, 11) für das Einlaßventil EV und das Auslaßventil AV zugeführt. Die beiden Regler (10, 11) verstärken das Eingangssignal (Regelabweichung) $x_d$, wobei deren genaue Verstärkungs-Charakteristik bzw. Struktur von einem Druckphasen-Detektor (18) über zu den Reglern (10, 11) führende Leitungen (19) umschaltbar ist. Der erwähnte Druckphasen-Detektor (18) erhält als Eingangssignal den Wert der Führungsgröße w und erkennt hieraus, welche Druckphase (Druckphase I = Druckaufbau, Druckphase II = Druck halten, Druckphase III = Druckabbau) gerade ansteht. Dies wird aus einem Vergleich der aktuellen Führungsgröße mit der Vorgeschichte der Führungsgröße w, die im Druckphasendetektor (18) gespeichert ist, erkannt.

Die Ausgangssignale der beiden Regler (10, 11) werden zunächst einer Vorsteuerung (12, 13) zugeführt. Hier können bekannte Störgrößen, beispielsweise der Druck im Vorrat (1) oder die Betriebsspannung $U_B$ der Elektronik aufgeschaltet werden. Hierdurch läßt sich der Einfluß dieser Störgrößen schneller ausregeln.

Die gebildeten Werte werden anschließend einem Dreipunktregler (14) zugeführt. Die Struktur dieses Reglers ist ebenfalls vom Druckphasendetektor (18) umschaltbar. Der Dreipunktregler (14) erhält weiterhin über einen Tiefpaß (15) den Wert der Regelabweichung $x_d$ als Mittelwert $\overline{x_d}$ zugeführt.

Die beiden Ausgangssignale des Dreipunktreglers (14), nämlich die Stellgrößen $y_{EV}$ sowie $y_{AV}$ für das Einlaßventil EV und das Auslaßventil AV werden weiter durch je einen Tiefpaß (16, 17) geleitet, wobei die beiden Tiefpässe ebenfalls vom Druckphasendetektor (18) umschaltbar sind, so daß sich je nach vorliegender Druckphase eine unterschiedliche Dämpfung ergibt.

Die beiden Ausgangssignale der Tiefpässe (16, 17) werden anschließend nach entsprechender digital-/analog-Wandlung in Verstärkern (7, 8) verstärkt, und dem Stellglied (Magnetventile 2, 3) zugeführt. Die dabei vorhandene Regelstrecke ist durch die Magnetfunktion (23, 24) sowie die Ventilcharakteristik (25) (vergl. Figuren 2, 3) dargestellt. Durch die Arbeitsmagneteigenschaften ergibt sich eine weitere Tiefpaß-Charakteristik.

An das Stellglied sind der Druckmittelvorrat (1) sowie der Auslaß (27) angeschlossen. Der Ausgangsdruck des Stellgliedes (Einlaß- und Auslaßventil 2, 3) gelangt nun über Druckmittelrohre und -schläuche zum Bremszylinder (4). Diese sind als Streckennachbildung (26) dargestellt. Der Bremsdruck p wird schließlich dem Bremszylinder (4) zugeführt, sowie als Istwert x über einen Drucksensor (5) (Druck-/Spannungswandler) dem Abtastregler (6) wieder zugeführt.

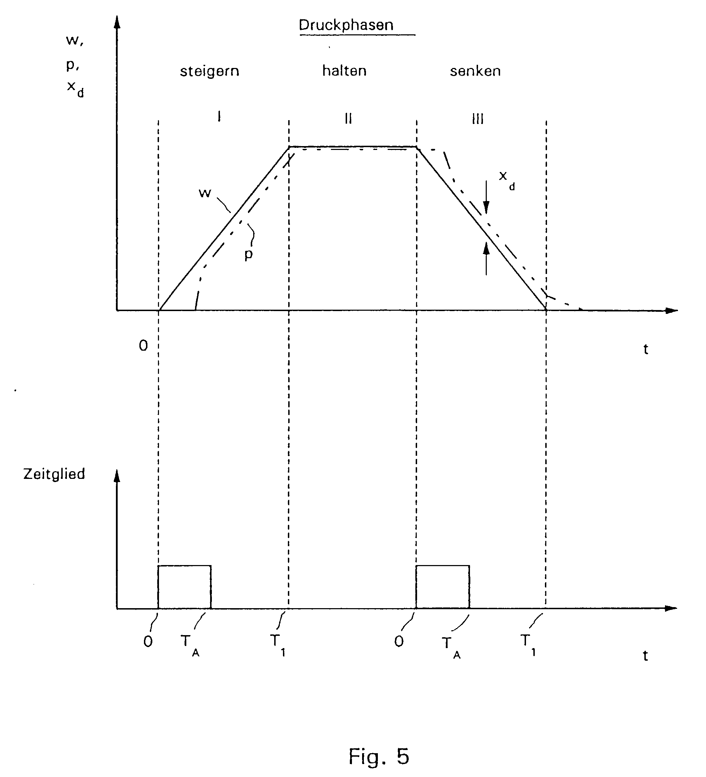

Im folgenden wird die Funktionsweise des in der Figur 4 schematisch dargestellten Reglers anhand eines in der Figur (5) dargestellten Diagrammes näher erläutert. In der Figur 5 (oberer Teil) sind über der Zeit t die Führungsgröße w (Sollwert), der sich ergebende Druck p (Istwert) sowie die Differenz der beiden vorgenannten Größen, also die Regelabweichung $x_d$ aufgetragen. Es können drei verschiedene Druckphasen unterschieden werden: Phase I = Druckaufbau, Phase II = Druckhalten, und Phase III = Druckabbau.

Im unteren Teil der Figur 5 ist über der Zeit t die Ein- und Abschaltung eines Zeitgliedes (siehe unten) mit der Einschalt-Zeitdauer $T_A$ dargestellt.

Zur Erreichung der oben angeführten Regelziele bei Berücksichtigung der Streckenbedingungen wird der nachfolgend beschriebene, nach einer Entscheidungsstrategie gesteuerter struktur- und parameterumschaltbare Regelalgorithmus angewendet.

Der erste Teil des Reglers besteht in seiner Grundstruktur aus einem $PIDD^2$-Regler (10, 11) mit jeweils einem Regler für den Einlaß- und den Auslaßventilkreis.

Der zweite Teil des Reglers besteht aus einem Dreipunkt-regler (14) mit dynamisch angepaßter Ventilsteuerkennung. Über diesen Dreipunktregler erfolgt die Aufsteuerung der Magnetventile (EV, AV) und das Einschleifen des $PIDD^2$-Algorithmus in den Regelkreis. Die Stellgrößen $y_{EV}$ und $y_{AV}$ werden entsprechen der unten angegebenen Entscheidungsstrategie stark gefiltert oder ungefiltert an die Magnetventile (2, 3) ausgegeben.

Als Kriterien zur Anpassung der Regler (10, 11) werden im Druckphasendetektor (18) der Gradient und die Signalvorgeschichte der Führungsgröße w herangezogen, wobei von einer zeitlich vorausgegangenen Druckphase auf die aktuell zu regelnde Druckphase geschlossen wird. Durch eine geeignete Wahl von Parametern wird ein zur Führungsgröße w mittlerer asymptotischer Regelgrößenverlauf angestrebt, wobei ein Gegenregeln starker Regelsignalüberschwinger meist nicht erforderlich ist.

Wie aus der Figur 5 oben ersichtlich ist, folgt der zu regelnde Druck p recht gut der Führungsgröße w, wobei nur in der jeweiligen Anfangsphase einer Drucksteigerung und einer Drucksenkung größere Abweichungen auftreten. Der Betrag der Regelabweichung $x_d$ ist im allgemeinen relativ gering.

Die Abtastformel der verwendeten digitalen Regler (10 und 11) lautet allgemein:

$$y(k) = y_v + K_P \cdot x_d(k) + K_I \cdot \sum_{i=0}^{k-1} x_d(i) + K_D \cdot x_{d\delta}(k) + K_{2D} \cdot x_{d2\delta}(k)$$

Die Darstellung liegt hier nicht wie sonst üblich im Zeitbereich, sondern, da es sich um eine digitale Regelung handelt, im Rechnerbereich. y(k) ist die vom Regler ausgegebene Stellgröße im k-ten Rechnerschritt als Funktion der Regelabweichung $x_d$.

Die einzelnen Summanden der Formel haben die folgende Bedeutung:

Die Größe $y_v$, die in den Vorsteuerungseinrichtungen (12, 13) zugefügt wird, kann entweder Vorsteuergrößen, wie Betriebsspannung $U_B$ oder Vorratsdruck beinhalten, oder eine zur Hystereseüberwindung der Magnetventile (siehe Figuren 2, 3) geeignete Vorsteuergröße $y_v$ beinhalten. Dabei wird zur Voreinstellung des Arbeitspunktes des Ventils ein Ansprechwert $y_v$ zum Reglerkorrekturwert addiert und so die Stellgröße vorgesteuert. Diese Vorsteuerung darf von der Höhe her aber nicht das Ventil öffnen, da aufgrund der steilen Ventilcharakteristik (siehe Figur 2, 3) in der anfänglichen Öffnungsphase dann ein Überregeln der Strecke passieren kann. Dabei ist der Öffnungsstromwert von verschiedenen Größen, wie Druckabfall an den Dichtflächen der Ventile, Ventilalterung, Werkstofftoleranzen und Umgebungstemperatur stark abhängig.

Der zweite Summand beinhaltet den bekannten Proportional-Anteil (P) der Regelung. Dabei kann die Konstante $K_P$ vom Druckphasendetektor (18), wie später beschrieben, je nach vorliegender Druckphase verändert werden.

Der dritte Summand gibt den Integral-Anteil (I) des Reglers an. Auch hier ist die zugehörige Konstante $K_I$ von der jeweiligen Druckphase abhängig. Das Integral in der Zeitebene wird hier durch eine Summe nachgebildet.

Der vierte Summand gibt den Differentialanteil (D) an. Die Konstante $K_D$ ist ebenfalls umschaltbar. Das Differential wird vom Rechner durch eine Differenz nachgebildet.

Der fünfte Summand gibt schließlich den Beschleunigungs-Anteil ($D^2$) an. Die Konstante $K_{2D}$ kann ebenfalls bei Bedarf verändert werden.

Die Konstanten $K_P$, $K_I$, $K_D$, $K_{2D}$ der o.g. Abtastformel sind erfindungsgemäß abhängig von der gerade auszuführenden Druckphase.

Während einer Drucksteigerung (Druckphase I), also von t = 0 bis $T_1$ in der Figur 5 (unten), wird zu Beginn der Drucksteigerung (t = 0 bis $T_A$) ein Zeitglied (28) mit der Verzögerungszeit $T_A$ gestartet, welches in den Reglern (10, 11) oder im Druckphasendetektor (18) enthalten ist. Solange das Zeitglied (28) aktiv ist, wird zur schnellen Einstellung des Arbeitspunktes des Einlaß-Magnetventils bzw. der Führungsgröße w die Struktur des digitalen Reglers (10) auf eine $PIDD^2$-Charakterikstik mit I-Dominanz geschaltet. Die $PDD^2$-Anteile des Reglers sind dabei auf eine Stabilisierung des Einschwingvorganges am nichtlinearen Magnetventil optimiert. Dies geschieht durch eine entsprechende Einstellung der o.g. vier Konstanten. Die Zeit $T_A$ des Zeitgliedes (28) ist dabei abgestimmt auf eine optimale Integrationszeit des I-Anteils in den jeweiligen gewünschen Arbeitspunkt des Einlaßventils (2).

Es ist auch möglich, die erwähnte schnelle Integration (I-Dominanz) bei Erreichen einer vorbestimmten (kleinen) Regelabweichung ($x_d$) zu beenden.

Durch die beschriebenen Maßnahmen werden größere Regelabweichungen ($x_d$) schnell ausgeregelt.

Das Auslaßventil (3) ist während der Drucksteigerung stets geschlossen, sofern kein Überschwingen des Ausgangsdruckes (p) und entsprechendes Gegenregeln stattfindet.

Nach Ablauf der o. g. Verzögerungszeit $T_A$ bis zum Zeitpunkt $T_1$ wird der Regler (10) abgestimmt auf eine Stabilisierung des Einschwingvorganges in der Regelstrecke, überschwingungsarmen weiteren Druckaufbau und Dämpfung der Rohrleitungsschwingungen des Luftstromes zum Bremszylinder bei Gradienten größer 10 bar/s. Die o. g. Abtastformel wird dabei mit entsprechend angepaßten Konstanten ausgeführt, wobei die D- und $D^2$-Anteile entsprechend abgeschwächt sind.

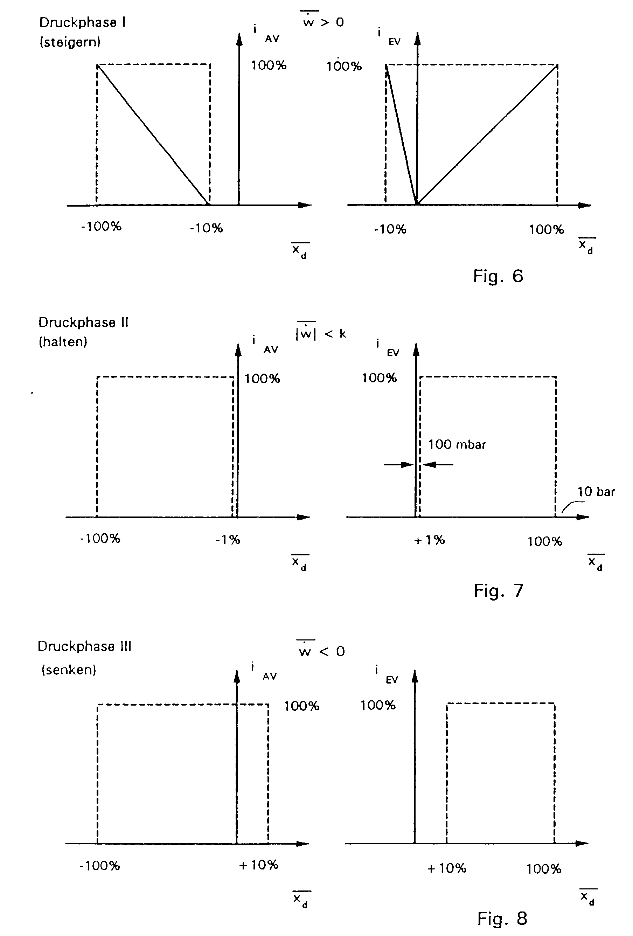

In der anschließenden Regelphase (II) (Druck halten) wird die Abtastformel abgestimmt auf eine Erzielung von geringen Regelabweichungen $x_d$ und eine Dämpfung der Ventileinschwingvorgänge bei einem Regeleinsatz, wenn die Regelabweichung $x_d$ eine Regeltotzone (s. Fig. 7) wieder verläßt. Dies kann z. B. bei Temperaturausgleichsvorgängen im Bremszylinder, wodurch der Druck sinkt, der Fall sein. In der genannten Regelphase (II) überwiegt der I-Anteil des Reglers.

In der anschließenden Regelphase (III) (Druckabbau) wird ebenfalls ein Zeitglied mit einer Verzögerungszeit $T_A$ gestartet. Bei Bedarf kann die Verzögerungszeit dieses Zeitgliedes auch vom obengenannten Wert von $T_A$ abweichen. Solange die Verzögerung $T_A$ aktiv ist, wird zur schnellen Einstellung des Arbeitspunktes des Auslaßventils (3) die Struktur des Reglers (11) so eingestellt, daß dieser als $PIDD^2$-Regler mit I-Dominanz arbeitet. Die $PDD^2$-Anteile sind dann auf die Stabilisierung des Einschwingvorganges am nicht linearen Magnetventil (Auslaßventil 3) optimiert.

Der Faktor $K_I$ in der Abtastformel für das Einlaßventil wird auf Null gesetzt, solange kein Überschwingen und Gegenregeln in der Druckabbau-Phase stattfindet.

Nach Ablauf der Verzögerungszeit $T_A$ bis zum Erreichen eines Zeitpunktes $T_1$ wird die Abtastformel abgestimmt auf eine Stabilisierung des Einschwingvorganges bei der Entlüftung in der Regelstrecke, auf einen überschwingungsarmen Druckabbau und eine Dämpfung der Rohrleitungsschwingungen des Luftstromes bei Druckgradienten von kleiner als -10 bar/s vom Bremszylinder zum Auslaß (27) (Schalldämpfer).

An die beiden $PIDD^2$-Regler (10, 11) schließt sich erfindungsgemäß der Dreipunktregler (14) an. Dieser hat die Aufgabe, die von den Reglern (10, 11) berechneten digitalen Stellkorrekturwerte an die Magnetventile (2, 3) auszugeben. Der Dreipunktregler (14) erfüllt dabei eine Reihe von Funktionen.

So darf zum einen eine gleichzeitige Ansteuerung der beiden Magnetventile (2, 3) nicht auftreten. Hierdurch würde sich ein unnötiger Druckmittelverlust ergeben. Der Dreipunktregler (14) gibt daher immer nur ein Regelsignal, auch wenn beide Regelsignale anstehen, weiter.

Insbesondere bei kleinen Sollwertdruckgradienten und bei geringen bestehenden Regelabweichungen, überwiegend in der Druckregelphase (II), kann sich ein Aufschwingen der Regelung und dadurch ein ständiges Umsteuern der Magnetventile ergeben. Dieses ist selbstverständlich nicht erwünscht. Der Dreipunktregler (14) unterdrückt ein solches Aufschwingen dadurch, daß als Umsteuerkriterium der Dreipunktfunktion die mittlere gefilterte Regelabweichung $x_d$ verwendet wird, die über das Zeitglied (15) zugeführt wird. Aus dem Vorzeichen dieser mittleren gefilterten Regelabweichung wird entschieden, welchem Magnetventil (EV (2) oder AV (3)) die von den Reglern (10, 11) berechnete Stellgröße zugeführt wird.

Zusätzlich wird in der Druckregelphase (II) (Druck halten) durch eine schaltbare Tiefpaßfilterung (Tiefpässe 16, 17) die Änderungsschnelle der Stellgrößen begrenzt. Hierdurch wird eine sogenannte Überregelung durch eine Überstellung der Magnetventile (EV (2), AV (3)) verringert bzw. verlangsamt. Überregelung bedeutet dabei, daß die Magnetventile in unnötiger Weise jenseits ihrer Arbeitsgrenzen auf- bzw. zugesteuert werden. Eine solche Übersteuerung würde ein unnötiges Hystereseverhalten der Ventile erzeugen.

Die genannte Tiefpaß-Filterfunktion bewirkt also eine Quasilinearisierung der sonst sprunghaften Magnetventilansteuerung, wie sie bei Dreipunktreglern und Stellgliedern mit steiler Arbeitskennung normalerweise typisch ist. Die Linearisierung ist besonders dann vorteilhaft, wenn sehr kleine Regelabweichungen ausgeregelt werden sollen.

Bei höheren Solldruckgradienten treten in der Strecke (26) Störsignalspitzen und Druckschwingungen mit Überregelungen auf. Diese Druckschwingungen, die aufgrund der Wellencharakteristik der Rohrleitungen entstehen, sind durch eine Filterung nicht zu unterdrücken, da dann die Reaktionszeit bis zur Umsteuerung der Ventile zu lang werden würde.

Um jetzt ebenfalls bei hohem Solldruckgradienten ein Pendelaufschwingen der beiden Magnetventile zu unterdrücken, werden in den Druckphasen (I) und (III) die Umsteuerkennungen im Dreipunktregler (14) so verschoben, daß auch eine größere kurzzeitige Regelabweichung nicht sofort zum Einsetzen einer Gegenregelung durch das gegenphasige Ventil führt (siehe Figuren 6, 7, 8).

In der Figur 6 ist die Verschiebung für $\dot{w} > 0$ dargestellt, d. h. die Führungsgröße w steigt (Druckphase I). Wie man aus dem linken Diagramm ($i_{AV}$) erkennt, wird durch den Dreipunktregler (14) eine Stellgröße (y) erst dann zum Auslaßventil durchgestellt (bis zum höchstmöglichen Wert von 100 % $i_{AV}$), wenn die mittlere Regelabweichung ($x_d$) einen Wert von -10 % übersteigt. Dies ist der Fall ab einem Druckwert (Totzone) von etwa 1 bar.

Das Einlaßventil (EV) wird dann angesteuert, wenn die mittlere Regelabweichung $x_d$ im Bereich von -10 % bis +100 % liegt. In diesem Fall wird die von den Reglern (10, 11) berechnete Stellgröße also bis zu ihrem möglichen Maximalwert von 100 % vom Dreipunktregler (14) durchgelassen.

Die Figur 7 gilt für die Druckphase (II), also Druck halten. Dies wird dadurch erkannt, daß der Betrag der mittleren Änderung der Führungsgröße $\dot{w}$ kleiner als eine (kleine) Konstante ist ($|\dot{w}| < k$). Dann erfolgt ein Durchlassen der Stellgrößen für das Auslaßventil bzw. das Einlaßventil nur dann, wenn die mittlere Regelabweichung $x_d$ in negativer oder positiver Richtung einen Betrag von 1 % übersteigt. Diese entspricht etwa einer Druckstufe von 100 mbar. Der Endwert 100 % beträgt für die Druckphase II etwa 10 bar.

In der Druckphase (III) (Druck senken bzw. $\dot{w} < 0$) wird das Auslaßventil dann angesteuert, wenn die mittlere Regelabweichung $x_d$ zwischen +10 % und -100 % liegt.

Das Einlaßventil wird dagegen angesteuert, wenn die mittlere Regelabweichung $x_d$ zwischen +10 % und +100 % liegt. Dabei bedeuten die Punkte 10 % bzw. 100 % etwa Druckwerte von 1 bzw. 10 bar.

In der Figur 6 sind innerhalb der gestrichelt dargestellten möglichen Strombereiche Diagonalen eingezeichnet, auf welchen sich die Arbeitspunkte der Ventile je nach der von den Reglern (10, 11) berechneten Stellgröße (y) befinden können.

Als weitere Verbesserung der beschriebenen Regelfunktion kann die Schwelle für die mittlere Regelabweichung $x_d$, bei deren Überschreitung eine Gegenregelung beginnt, auch als Funktion proportional zum Betrag des mittleren Solldruckgradienten gewählt werden. In diesem Fall sind die Regeleinsatzpunkte (siehe Figur 6 bis 8) nicht fest, sondern je nach Änderungsgeschwindigkeit des Solldrucks (Führungsgröße w) verschiebbar.

Hinter dem Dreipunktregler (14), zwischen den Tiefpässen (16, 17) und den Verstärkern (7, 8) befinden sich (nicht dargestellte) Digital-Analog-Wandler zur analogen Ansteuerung der Verstärker (7, 8) bzw. der Magnetventile (2, 3).

**Patentansprüche**

1. Druckregeleinrichtung mit einem digitalen Abtastregler (6) und mit mindestens einem Druckmittelvorrat (1), einem Einlaßventil (2), einem Auslaßventil (3), einem Verbraucher (4) und einem Auslaß bzw. einer Drucksenke (27) zum Minimieren einer zwischen einem Istwert x und einer Führungsgröße w bestehenden Regelabweichung $x_d$, insbesondere zum Einstellen von Bremsdrücken p in einem Bremssystem eines Fahrzeugs,
dadurch gekennzeichnet,
daß der digitale Abtastregler (6) einen Druckphasen-Detektor (18) aufweist, der die jeweils vorliegende Druckphase der Führungsgröße w erkennt, und davon abhängig die Struktur des Reglers (6) umschaltet.

2. Druckregeleinrichtung nach Anspruch 1,
dadurch gekennzeichnet,
daß der Druckphasen-Detektor (18) die Druckphasen Druckaufbau, Druckhalten und Druckabbau unterscheidet.

3. Druckregeleinrichtung nach Anspruch 1 bis 2,
dadurch gekennzeichnet,
daß der Regler (6) aus einer Reihenschaltung zweier Einzelregler (10, 11), eines Dreipunktreglers (14) und zweier Tiefpässe (16, 17) besteht.

4. Druckregeleinrichtung nach Anspruch 1 bis 3,
gekennzeichnet durch folgende Merkmale:

   a) der Abtastregler (6) besteht mindestens aus je einem Einzelregler (10, 11) mit umschaltbarer Struktur für das Einlaßventil (2) und das Auslaßventil (3);

   b) den Einzelreglern (10, 11) ist ein Dreipunkt-Regler (14) nachgeschaltet, der über einen Tiefpaß (15) von der mittleren Regelabweichung $x_d$ in seinem Regelverhalten umschaltbar ist;

   c) dem Dreipunkt-Regler (14) sind je ein weiterer Tiefpaß (16, 17) für das Einlaßventil (2) und das Auslaßventil (3) nachgeschaltet, welche die Änderungsschnelle der Stellgröße y am Ausgang des Abtastreglers (6) begrenzen;

   d) es ist ein von der Führungsgröße w beeinflußbarer Druckphasen-Detektor (18) vorgesehen, welcher über Leitungen (19) mit den Einzelreglern (10, 11), dem Dreipunkt-Regler (14) und den Tiefpässen (16, 17) verbunden ist, und deren Struktur in Abhängigkeit von der augenblicklich vorhandenen Druckphase I, II, III umschaltet, wobei die Druckphase I den Druckaufbau, die Druckphase II das Druckhalten, und die Druckphase III den Druckabbau im Bremszylinder (4) umfaßt.

**5.** Druckregeleinrichtung nach Anspruch 3 bis 4, <u>dadurch gekennzeichnet</u>, daß die Einzelregler (10, 11) ein PIDD$^2$-Verhalten aufweisen.

**6.** Druckregeleinrichtung nach Anspruch 1 bis 5, <u>dadurch gekennzeichnet,</u> daß ein Zeitglied (28) mit einer Verzögerungszeit $T_A$ vorgesehen ist, das zu Beginn der Druckphasen I und III gestartet wird, und die Struktur der Regler (10, 11) auf eine PIDD$^2$-Charakteristik mit I-Dominanz umschaltet.

**7.** Druckregeleinrichtung nach Anspruch 6, <u>dadurch gekennzeichnet,</u> daß die Verzögerungszeit $T_A$ abgestimmt ist auf die Integrationszeit in den Arbeitspunkt der Ventile (2, 3) und etwa 100 ms beträgt.

**8.** Druckregeleinrichtung nach Anspruch 6, <u>dadurch gekennzeichnet,</u> daß die Verzögerungszeit $T_A$ nach Erreichen einer vorbestimmten kleinen Regelabweichung $x_d$ beendet wird.

**9.** Druckregeleinrichtung nach Anspruch 3 bis 8, <u>dadurch gekennzeichnet,</u> daß zur Voreinstellung der Arbeitspunkte der Ventile (2, 3) ein Ansprechwert $y_v$ zum Ausgangswert der Einzelregler (10, 11) addiert wird, und so die Anfangshysterese der Ventile (2, 3) korrigiert wird.

**Claims**

**1.** Pressure control device having a digital sensing controller (6) and at least one pressure medium supply (1), an inlet valve (2), an outlet valve (3), a consumer (4) and an outlet or pressure sink (27) to minimise a control deviation $x_d$ existing between an actual value x and a control input w, especially for adjusting brake pressures p in a brake system of a vehicle,
characterised in that the digital sensing controller (6) has a pressure phase detector (18) that detects the existing pressure phase of the control input w and, in dependence thereon, switches the structure of the controller (6).

**2.** Pressure control device according to claim 1, characterised in that the pressure phase detector (18) distinguishes between the pressure phases pressure build-up, pressure maintained and pressure decrease.

**3.** Pressure control device according to claims 1 and 2, characterised in that the controller (6) consists of a series connection of two individual controllers (10, 11), a three-position controller (14) and two low-pass filters (16, 17).

**4.** Pressure control device according to claims 1 to 3, characterised by the following features:

a) the sensing controller (6) consists of at least one individual controller (10, 11) having a switchable structure for each of the inlet valve (2) and outlet valve (3):

b) connected downstream of the individual controllers (10, 11) is a three-position controller (14) which can be switched, in its controlled behaviour, by the mean control deviation $x_d$ by way of a low-pass filter (15);

c) connected downstream of the three-position controller (14) are further low-pass filters (16, 17) for the inlet valve (2) and the outlet valve (3), respectively, which low-pass filters limit the speed of change of the correcting variable y at the output of the sensing controller (6);

d) a pressure phase detector (18) that can be influenced by the control input w is provided, which is connected by way of lines (19) to the individual controllers (10, 11), the three-position controller (14) and the low-pass filters (16, 17) and switches the structure thereof in dependence upon the pressure phase I, II or III that is present at the time, pressure phase I being pressure build-up, pressure phase II being pressure maintained and pressure phase III being pressure decrease in the brake cylinder (4).

**5.** Pressure control device according to claims 3 and 4, characterised in that the individual controllers (10, 11) demonstrate PIDD$^2$ behaviour.

**6.** Pressure control device according to claims 1 to 5, characterised in that there is provided a time element (28) having a delay time $T_A$, which time element is started at the start of pressure phases I and III and which switches the structure of the controllers (10, 11) to a PIDD$^2$-characteristic having I-dominance.

**7.** Pressure control device according to claim 6, characterised in that the delay time $T_A$ is set to the time of integration to the operating point of the valves (2, 3) and is approximately 100 ms.

**8.** Pressure control device according to claim 6, characterised in that the delay time $T_A$ is terminated once a predetermined small control deviation $x_d$ has been reached.

**9.** Pressure control device according to claims 3 to 8, characterised in that, in order to preadjust the operating points of the valves (2, 3) a response value $y_v$ is added to the output value of the individual controllers (10, 11) and thus the initial hysteresis of the valves (2, 3) is corrected.

**Revendications**

**1.** Dispositif de régulation de pression équipé d'un régulateur d'asservissement numérique (6) et d'au moins un réservoir de fluide sous pression (1), d'une soupape d'admission (2), d'une soupape d'échappement (3), d'un appareil d'utilisation (4) et d'un échappement ou d'un réducteur de pression (27) en vue de rendre minimal un écart de régulation $x_d$ existant entre une valeur réelle x et une grandeur de référence w, en particulier en vue du réglage de la pression de freinage p dans un système de frein d'un véhicule,
caractérisé en ce que le régulateur d'asservissement numérique (6) comporte un détecteur de phases de pression (18), qui détecte la hase de pression présente de la grandeur de référence w, et commute en conséquence la structure du régulateur (6).

**2.** Dispositif de régulation de pression selon la revendication 1, caractérisé en ce que le détecteur de phases de pression (18) différencie les phases d'établissement, de maintien et de réduction de pression.

**3.** Dispositif de régulation de pression selon la revendication 1 ou 2, caractérisé en ce que le régulateur (6) est constitué d'un montage série de deux régulateurs (10, 11), d'un régulateur à trois points (14) et de deux filtres passe-bas (16, 17).

**4.** Dispositif de régulation de pression selon l'une quelconque des revendications 1 à 3, caractérisé en ce que:

a) le régulateur d'asservissement (6) se compose au moins d'un régulateur (10, 11) de structure commutable pour la soupape d'admission (2) et la soupape d'échappement (3) ;
b) en aval des régulateurs (10, 11) est disposé un régulateur à trois points (14), dont le comportement de régulation peut être commuté par l'intermédiaire d'un filtre passe-bas (15) par l'écart de régulation moyen $x_d$ ;
c) en aval du régulateur à trois points (14) sont disposés respectivement un autre filtre passe-bas (16, 17) pour la soupape d'admission (2) et la soupape d'échappement (3), qui limitent la vitesse de variation de la grandeur de réglage y à la sortie du régulateur d'asservissement (6) ;
d) un détecteur de phases de pression (18) pouvant être influencé par la grandeur de référence w est prévu, qui est relié par l'intermédiaire de lignes (19) aux régulateurs (10, 11), au régulateur à trois points (14) et aux filtres passe-bas (16, 17), et dont la structure est commutée en fonction de la phase de pression actuellement présente I, II, III, la phase de pression I représentant l'établissement de pression, la phase de pression II le maintien de la pression, et la phase de pression III la réduction de pression dans le cylindre de frein (4).

**5.** Dispositif de régulation de pression selon les revendications 3 ou 4, caractérisé en ce que les régulateurs (10, 11) présentent une caractéristique PIDD$^2$.

**6.** Dispositif de régulation de pression selon l'une quelconque des revendications 1 à 5, caractérisé en ce qu'un élément de temporisation (28) avec un temps de retard ($T_A$) est prévu, qui est déclenché au début des phases de pression I et III, et commute la structure des régulateurs (10, 11), sur une caractéristique PIDD$^2$ à dominance I.

**7.** Dispositif de régulation de pression selon la revendication 6, caractérisé en ce que le temps de retard $T_A$ est accordé sur le temps d'intégration au point de travail des soupapes (2, 3) et s'élève à environ 100 ms.

8. Dispositif de régulation de pression selon la revendication 6, caractérisé en ce que le temps de retard $T_A$ prend fin après l'obtention d'un écart de régulation faible prédéterminé $x_d$.

9. Dispositif de régulation de pression selon l'une quelconque des revendications 3 à 8, caractérisé en ce qu'en vue du préréglage des points de travail de soupapes (2, 3) est ajoutée une valeur de réponse $y_v$ à la valeur initiale des régulateurs (10, 11), et ainsi est corrigée l'hystérésis initiale des soupapes (2, 3).

Digitaler Abtast-regler

i_EV

i_AV

w

x

U / p

p

1  2  3  4  5  6  7  8  27  10

EP 0 669 565 B1

Fig. 1

Fig. 2

Fig. 3

Fig. 4

Fig. 5

Druckphase I
(steigern)

$\overline{\dot{w}} > 0$

Fig. 6

Druckphase II
(halten)

$|\overline{\dot{w}}| < k$

Fig. 7

Druckphase III
(senken)

$\overline{\dot{w}} < 0$

Fig. 8

14